# EUROPÄISCHE PATENTSCHRIFT

(11) **EP 3 295 144 B1**
(45) Veröffentlichungstag und Bekanntmachung des Hinweises auf die Patenterteilung: **22.07.2020**
(21) Anmeldenummer: 16721642.3
(22) Anmeldetag: 07.05.2016
(51) Int. Cl.: G01M 11/02

(54) **VORRICHTUNG ZUR MESSUNG EINER ABBILDUNGSEIGENSCHAFT EINES OPTISCHEN SYSTEMS**
DEVICE FOR MEASURING AN IMAGING PROPERTY OF AN OPTICAL SYSTEM
DISPOSITIF POUR LA MESURE D'UNE PROPRIÉTÉ D'UNE IMAGE D'UN SYSTÈME OPTIQUE

(30) Priorität: 13.05.2015 DE 102015006015
(43) Veröffentlichungstag der Anmeldung: 21.03.2018
(73) Patentinhaber: Trioptics GmbH, 22880 Wedel (DE)
(72) Erfinder: HEINISCH, Josef, 22880 Wedel (DE); POIKAT, Ralf, 25482 Appen (DE)
(74) Vertreter: Ostertag & Partner Patentanwälte mbB
(86) Internationale Anmeldenummer: PCT/EP2016/000749
(87) Internationale Veröffentlichungsnummer: WO 2016/180525

(56) Entgegenhaltungen:
- US-A1- 2010 165 329
- US-B2- 8 817 246

## Beschreibung

### HINTERGRUND DER ERFINDUNG

### 1. Gebiet der Erfindung

Die Erfindung betrifft eine Vorrichtung zur Messung einer Abbildungseigenschaft eines Objektivs, einer Linse oder eines anderen optischen Systems. Bei der Abbildungseigenschaft kann es sich beispielsweise um die Modulationsübertragungsfunktion (MTF, *modulation transfer function*) handeln.

### 2. Beschreibung des Standes der Technik

Im Stand der Technik bekannt sind Vorrichtungen zur Messung einer Abbildungseigenschaft eines optischen Systems, bei denen in einer Brennebene des optischen Systems ein Lichtmuster, zum Beispiel einer Anordnung aus Strichkreuzen oder Punkten, erzeugt wird. Zu diesem Zweck kann beispielsweise eine Blende in der Brennebene des optischen Systems angeordnet werden, die von einer Lichtquelle beleuchtet wird und ein Muster aus Blendenöffnungen aufweist.

Auf der gegenüberliegenden Seite des optischen Systems sind mehrere voneinander getrennte Kameras angeordnet, die jeweils ein Objekt und einen Lichtsensor aufweisen, der in einer Brennebene des Objektivs angeordnet ist. Die Kameras sind dabei so verteilt angeordnet, dass jede Kamera mit ihrem Lichtsensor das Bild von genau einem Ausschnitt des Lichtmusters erfasst. Auf diese Weise kann beispielsweise die Modulationsübertragungsfunktion an mehreren Feldpositionen unabhängig voneinander gemessen werden. Derartige Vorrichtungen sind beispielsweise aus Dokumente US8817246 oder US2010165329 bekannt.

Infolge stetig steigender Anforderungen an die Abbildungseigenschaften von optischen Systemen ist es wünschenswert, die Modulationsübertragungsfunktion oder eine andere Abbildungseigenschaft des optischen Systems an möglichst vielen Feldpositionen zu messen. Da für jeden Ausschnitt aus dem Lichtmuster eine eigene Kamera erforderlich ist, die ein gewisses Bauvolumen beansprucht, wird es bei größeren Zahlen von Ausschnitten schwierig, eine entsprechende Zahl von Kameras so dicht anzuordnen, dass das Messlicht aus der gewünschten Richtung in die entsprechenden Kameras eintreten kann.

### ZUSAMMENFASSUNG DER ERFINDUNG

Aufgabe der Erfindung ist es daher, eine Vorrichtung zur Messung einer Abbildungseigenschaft eines optischen Systems anzugeben, bei der möglichst viele voneinander unabhängige Kameras Messlicht, das aus unterschiedlichen Richtungen aus dem optischen System austritt, erfassen können.

Erfindungsgemäß wird diese Aufgabe durch eine Vorrichtung zur Messung einer Abbildungseigenschaft eines optischen Systems gelöst, das eine Lichtmustererzeugungseinrichtung hat, die dazu eingerichtet ist, in einer Brennebene des optischen Systems ein Lichtmuster zu erzeugen. Die Vorrichtung hat ferner eine Referenzachse, an der die optische Achse des optischen Systems ausrichtbar ist, und weist eine Anordnung von N voneinander getrennten Kameras, wobei jede Kamera ein Objektiv und einen Lichtsensor aufweist, der in einer Brennebene des Objektivs angeordnet ist. Die Kameras sind derart auf einer der Lichtmustererzeugungseinrichtung gegenüberliegenden Seite angeordnet, dass jede Kamera mit ihrem Lichtsensor das unter der Mitwirkung des optischen Systems entstandene Bild von genau einem Ausschnitt des Lichtmusters erfasst. Erfindungsgemäß weist die Vorrichtung ferner mindestens ein Strahlablenkelement auf, das derart zwischen dem optischen System und der mindestens einen Kamera angeordnet ist, dass es das auf die mindestens eine Kamera auftreffende Licht von der Referenzachse des optischen Systems weg ablenkt.

Durch die Ablenkung des Lichts weg von der Referenzachse müssen nicht mehr alle Kameras in der Nähe der Referenzachse angeordnet sein, sondern können sich auch weiter von ihr entfernt befinden. Dadurch lässt sich im Prinzip der gesamte Halbraum auf der Lichtaustrittsseite des zu vermessenden optischen Systems nutzen, um eine Vielzahl von Kameras anzuordnen.

Das mindestens eine Strahlablenkelement kann dabei so angeordnet sein, dass die optische Achse mindestens einer Kamera senkrecht zu der Referenzachse angeordnet ist. Auf diese Weise können die einzelnen Messlichtstrahlenbündel weit aufgespreizt werden, wodurch entsprechend viel Platz für die Anordnung der Kameras geschaffen wird.

Wenn die Zahl N der Kameras größer als 4 ist, können mindestens 4 erste Kameras und insbesondere auch deren optischen Achsen in einer ersten Ebene angeordnet sein. Dadurch wird eine sehr flach bauende Anordnung der ersten Kameras ermöglicht. Dies schafft wiederum die Voraussetzung dafür, weitere Kameras in anderen parallelen Ebenen gestaffelt anzuordnen. Die erste Ebene verläuft dabei vorzugsweise senkrecht zu der Referenzachse .

Auf diesem Konzept aufbauend sind bei einem anderen Ausführungsbeispiel mehr als 9 Kameras vorgesehen, wobei mindestens 4 zweite Kameras in einer zweiten Ebene angeordnet sind, die parallel zu der ersten Ebene verläuft.

Die ersten und die zweiten Kameras und die Strahlablenkelemente können in diesem Fall so angeordnet sein, dass Licht, das unter einem Winkel α₁ bezüglich der Referenzachse aus dem optischen System austritt, von den Strahlablenkelementen stärker abgelenkt und auf die ersten Kameras gerichtet wird, und dass Licht, das unter einem Winkel α₂ > α₁ bezüglich der Referenzachse aus dem optischen System austritt, weniger stark abgelenkt und auf die zweiten Kameras gerichtet wird, wobei die erste Ebene weiter entfernt von dem optischen System angeordnet ist als die zweite Ebene. Dieses Konzept, das eine besonders effiziente Ausnutzung des Bauraums ermöglicht lässt sich auch auf drei oder mehr Ebenen erweitern. Dadurch kann die Zahl der vermessbaren Feldpositionen weiter erhöht werden.

Die in einer Ebene angeordneten Kameras sind vorzugsweise ringförmig um die Referenzachse herum angeordnet. Die optischen Achsen der ringförmig angeordneten Kameras sind dabei vorzugsweise winkelmäßig äquidistant in einer Ebene verteilt. Auf diese Weise wird eine symmetrische Anordnung der Kameras auf der Lichtaustrittsseite des optischen Systems erreicht.

Die in einer Ebene angeordneten Kameras und die diesen zugeordneten Strahlablenkelemente können an einer gemeinsamen Tragstruktur befestigt sein, die beispielsweise als ringförmige Montageplatte ausgebildet sein kann. Auf diese Weise lassen sich mehrere Ebenen mit jeweils mehreren Kameras mit konstruktiv einfachen Mitteln hintereinander gestaffelt anordnen.

Die Lichtmustererzeugungseinrichtung kann eine Lichtquelle und eine von der Lichtquelle ausleuchtbare Blende aufweisen, die in der Brennebenen des optischen Systems anordenbar ist und ein Muster aus Blendenöffnungen aufweist. Alternativ hierzu kann die Lichtmustererzeugungseinrichtung auch eine Anordnung von selbstleuchtenden Punktlichtelementen, z. B. von LEDs, umfassen.

Bei den Strahlablenkelementen handelt es sich vorzugsweise um Planspiegel oder Umlenkprismen. In Betracht kommen jedoch auch gekrümmte Spiegel oder diffraktive optische Elemente.

Vorzugsweise hat genau eine Kamera eine optische Achse, die mit der Referenzachse fluchtet. Das auf diese Kamera treffende Licht wird somit nicht von Strahlablenkelementen abgelenkt.

### KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:
- Figur 1: einen schematischen Meridionalschnitt durch eine Messvorrichtung gemäß dem Stand der Technik;
- Figur 2: eine Draufsicht auf eine Blende, die Teil der in der Figur 1 gezeigten Messvorrichtung ist;
- Figur 3: eine Blende, deren Bild in einer erfindungsgemäßen Messvorrichtung von mehreren Kameras erfasst wird;
- Figur 4: einen Meridionalschnitt durch eine erfindungsgemäße Messvorrichtung; und
- Figur 5: eine Ansicht auf eine Anordnung von Strahlablenkelementen, die Teil der in der Figur 4 gezeigten Messvorrichtung ist.

### BESCHREIBUNG DES STANDES DER TECHNIK

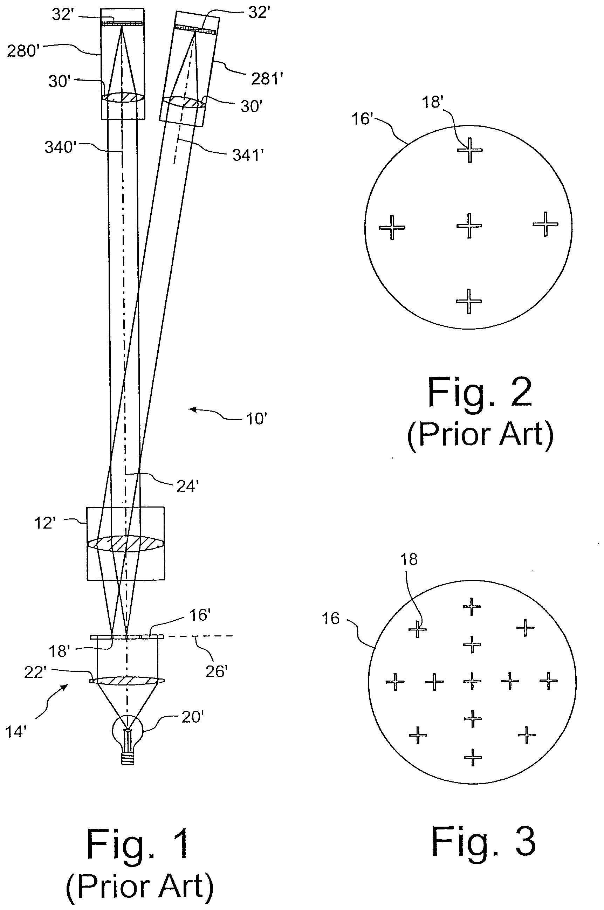

Zur Erläuterung der Funktionsweise der erfindungsgemäßen Messvorrichtung wird zunächst auf die Figur 1 Bezug genommen, in der eine Messvorrichtung gemäß dem Stand der Technik in einem schematischen Meridionalschnitt gezeigt und insgesamt mit 10' bezeichnet ist.

Die Messvorrichtung 10' ist dafür vorgesehen, die Modulationsübertragungsfunktion (MTF) eines im Folgenden als Prüfling 12' bezeichneten optischen Systems zu messen. Der Prüfling 12' ist hier nur als einzelne Linse angedeutet; häufig wird es sich um ein optisches System mit mehreren refraktiven und/oder reflektiven optischen Elementen handeln.

Die Modulationsübertragungsfunktion stellt ein wichtiges Hilfsmittel dar, um die Abbildungsqualität von optischen Systemen quantitativ zu bewerten, und beschreibt die Auflösungsleistung eines optischen Systems durch das Verhältnis des relativen Bildkontrasts zum relativen Objektkontrast. Wenn ein Objekt von einem optischen System abgebildet wird, kommt es durch Abbildungsfehler und Beugungserscheinungen zwangsläufig zu einer Qualitätsverringerung in der Bildebene. Auch Fertigungsabweichungen sowie Montage- und Ausrichtungsfehler schwächen die Abbildungsleistung des Prüflings 12'.

Zur Messung Modulationsübertragungsfunktion bildet der Prüfling 12' ein Objekt; aus dem Bild des Objekts kann auf die Modulationsübertragungsfunktion des Prüflings 12' geschlossen werden. Das von dem Prüfling 12' abgebildete Objekt wird durch ein Lichtmuster gebildet, das von einer Lichtmustererzeugungseinrichtung 14' erzeugt wird. Die Lichtmustererzeugungseinrichtung 14' weist eine Blende 16' auf, die mehrere Blendenöffnungen 18' hat. Die Figur 2 zeigt eine Draufsicht auf die Blende 16', in der die Anordnung der Blendenöffnungen 18' erkennbar ist. Die Blendenöffnungen 18' haben hier die Form von Kreuzschlitzen, die in einer regelmäßigen Anordnung über die Blende 16' verteilt sind. Der Abstand der äußeren Blendenöffnungen 18' von der Blendenmitte ist hier identisch. Die Blende 16' wird von einer als Glühbirne dargestellten Lichtquelle 20' mit Hilfe eines Kondensor 22' gleichmäßig ausgeleuchtet.

Der Prüfling 12' wird so in der Messvorrichtung 10' angeordnet, dass seine optische Achse mit einer Referenzachse 24' der Messvorrichtung 10' fluchtet. Die Referenzachse 24' der Vorrichtung 10' fällt dabei mit der optischen Achse des Kondensors 22' zusammen. Außerdem wird der Prüfling 12' axial so positioniert, dass die Blende 16' in der Brennebene 26' des Prüflings 12' angeordnet ist. Dadurch wird das durch die Blendenöffnungen 18' definierte Lichtmuster vom Prüfling 12' ins Unendliche abgebildet.

Auf der der Lichtmustererzeugungseinrichtung 14' gegenüberliegenden Seite des Prüflings 12' sind zwei identisch aufgebaute Kameras 280', 281' angeordnet. Die Kameras 280', 281' enthalten jeweils ein Objektiv 30' und einen ortsauflösenden Lichtsensor 32', der sich in einer Brennebene des Objektivs 30' befindet. Auf dem Lichtsensor 32' entsteht dadurch jeweils ein Ausschnitt aus dem von der Lichtmustererzeugungseinrichtung 14' erzeugten Lichtmuster. Der Ausschnitt wird dabei u. a. durch die Anordnung der Kameras 280', 281' bezüglich der Referenzachse 24' festgelegt. Die Kamera 280', deren optische Achse 340' mit der Referenzachse 24' fluchtet, erfasst ein Bild der Blendenöffnung 18' in der Mitte der Blende 16' .

Die optische Achse 341' der anderen Kamera 281' ist geneigt zur Referenzachse 24' angeordnet. Dadurch erfasst die Kamera 281' das Bild einer der äußeren Blendenöffnungen 18'.

Um die zentrale Kamera 280' herum sind noch drei weitere Kameras angeordnet, die in der Figur 1 aus Gründen der Übersicht nicht dargestellt sind. Diese drei weiteren Kameras erfassen die Bilder der drei anderen äußeren Blendenöffnungen 18'. Durch Auswertung der auf den Lichtsensoren 32' der Kameras 280', 281' entstehenden Bilder der Blendenöffnungen 18' kann die Modulationsübertragungsfunktion des Prüflings 12' in an sich bekannter Weise bestimmt werden. Mit der in den Figuren 1 und 2 dargestellten bekannten Messvorrichtung 10' lässt sich die Modulationsübertragungsfunktion an fünf unterschiedliche Feldpositionen messen.

Für Feldpositionen zwischen den fünf Blendenöffnungen 18' lässt sich jedoch keine Aussage über die Modulationsübertragungsfunktion treffen. Im Allgemeinen ist es deswegen wünschenswert, wenn die Modulationsübertragungsfunktion an möglichst vielen unterschiedlichen Feldpositionen unabhängig gemessen werden kann.

Aus der Figur 1 wird allerdings deutlich, dass bereits bei fünf zu vermessenden Feldpositionen die beiden dargestellten Kameras 280', 281' und die drei weiteren nicht dargestellten Kameras sehr dicht zueinander angeordnet sein müssen. Für eine Messung an z.B. 13 Feldpositionen, etwa unter Verwendung der in der Figur 3 gezeigten Blende 16, müssten somit 13 Kameras um die Referenzachse 24' herum angeordnet sein. Da die Kameras nicht beliebig miniaturisierbar sind, lässt sich die Modulationsübertragungsfunktion mit dem herkömmlichen Aufbau die Messvorrichtung 10' an derart vielen Feldpositionen nicht vermessen.

### BESCHREIBUNG EINES BEVORZUGTEN AUSFÜHRUNGSBEISPIELS

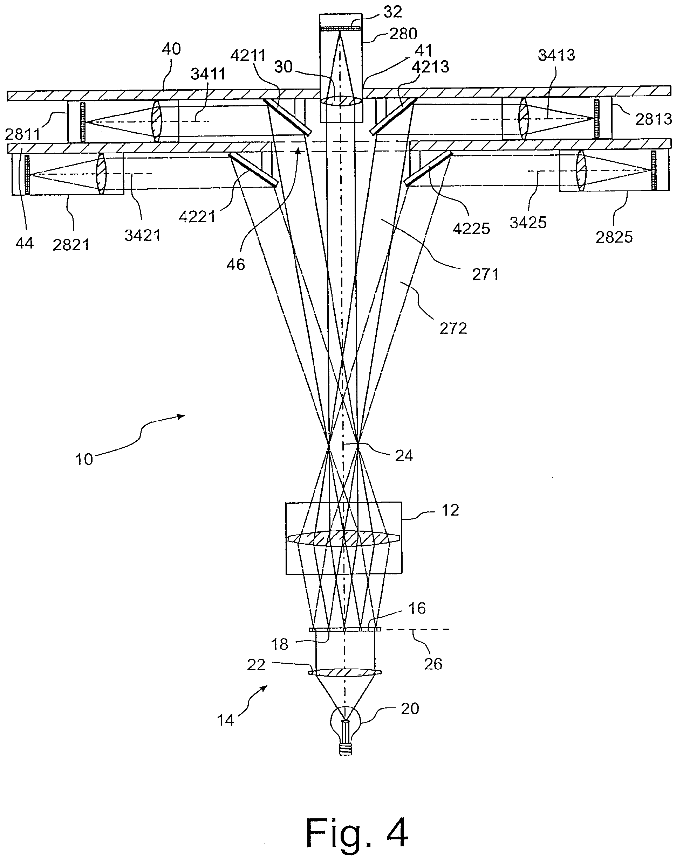

Die Figur 4 zeigt eine erfindungsgemäße Messvorrichtung 10 in einem an die Figur 1 angelehnten meridionalen Schnitt, mit der eine Messung auch an 13 oder mehr Feldpositionen möglich ist. Teile, die in gleicher oder ähnlicher Weise auch in der bekannten Messvorrichtung 10' enthalten sind, sind mit der gleichen Bezugsziffer, jedoch ohne Apostroph bezeichnet und werden nicht nochmals im Einzelnen erläutert.

Um jede der in der Figur 3 gezeigten N = 13 Blendenöffnungen 18 getrennt voneinander auf jeweils einen Bildsensor 33 abbilden zu können, weist die erfindungsgemäße Messvorrichtung 10 eine entsprechende Zahl von N = 13 Kameras auf, die zum größten Teil in zwei unterschiedlichen Ebenen angeordnet sind.

In dem meridionalen Schnitt der Figur 4 sind von den N = 13 Kameras 5 Kameras 280, 2811, 2813, 2821 und 2825 dargestellt. Die Kameras haben den gleichen Aufbau wie die in der Figur 1 gezeigten Kameras 280', 281' und umfassen somit jeweils ein Objektiv 30 und einen ortsauflösenden Lichtsensor 32, der in der Brennebene des Objektivs 30 angeordnet ist.

Die in der Figur 4 oben erkennbaren Kameras 2811 und 2813 sind an einer ersten Montageplatte 40 befestigt, die senkrecht zur Referenzachse 24 der Messvorrichtung 10 angeordnet ist. Die erste Montageplatte 40 hat eine zentrale Öffnung 42, durch die hindurch sich die vertikal ausgerichtete Kamera 280 erstreckt. Mit der Kamera 280 lässt sich die Modulationsübertragungsfunktion für die axiale Feldposition messen.

Die Kameras 2811, 2813 sind horizontal ausgerichtet, so dass ihre optischen Achsen 3411 bzw. 3413 koplanar und senkrecht zur Referenzachse 24 angeordnet sind. Um schräg zur Referenzachse 24 verlaufende kollimierte Lichtbündel 271 auf die Kameras 2811 bzw. 2813 zu richten, sind an der ersten Montageplattform 40 außerdem plane Umlenkspiegel 4211 bzw. 4213 befestigt, welche die Lichtbündel 271 um einen Winkel α₁ in der Meridionalebene umlenken.

Unterhalb der Kameras 2811, 2813 erstreckt sich eine zweite Montageplatte 44, an der die übrigen Kameras befestigt sind. Die zweite Montageplatte 44 hat eine größere zentrale Öffnung 46, deren Durchmesser so bemessen ist, dass die geneigten Lichtbündel 271 hindurch treten und auf die Umlenkspiegel 4211, 4213 treffen können.

An der zweiten Montageplatte 44 sind insgesamt 8 Kameras befestigt, von denen lediglich die in dem Meridionalschnitt angeordneten Kameras 2821 und 2825 dargestellt sind. Deren optische Achsen 3421 und 3425 verlaufen ebenfalls koplanar in einer zweiten Ebene, die sich parallel zu der ersten Ebene erstreckt. Um die stärker gegenüber der Referenzachse 24 geneigten Lichtbündel 272 in die Kameras 2821, 2825 zu richten, sind an der zweiten Montageplatte 44 weitere Umlenkspiegel 4221, 4225 befestigt, die eine Strahlumlenkung um einen Winkel α₂ < α₁ bewirken.

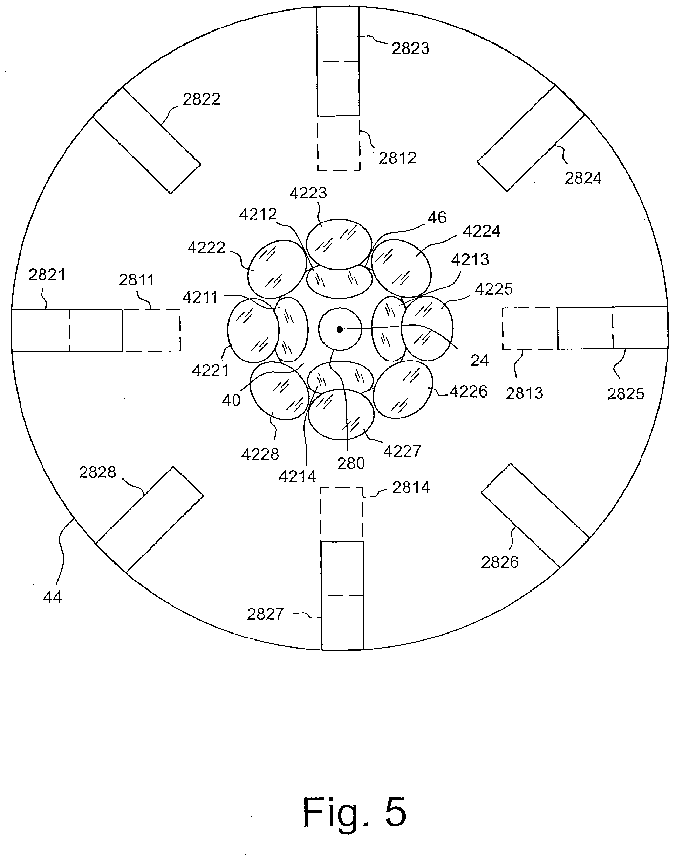

Die Figur 5 zeigt eine Ansicht auf die Anordnung der N = 13 Kameras in Lichtausbreitungsrichtung, d.h. in der Figur 4 von unten. In dieser Darstellung ist die Anordnung der acht Kameras 2821 bis 2828 auf der zweiten Montageplatte 44 erkennbar. Die Kameras 2821 bis 2828 sind winkelmäßig äquidistant um die Referenzachse 24 herum verteilt angeordnet, so dass der Winkel zwischen den optischen Achsen zweier benachbarter Kameras 2821 bis 2828 stets 45° beträgt. Entsprechend sind auch die den Kameras zugeordneten acht Umlenkspiegel 4221 bis 4228 winkelmäßig äquidistant um die Referenzachse 24 herum verteilt angeordnet.

Durch die Öffnung 46 in der zweiten Montageplatte 44 hindurch kann man die Anordnung der vier Umlenkspiegel 4111 bis 4114 erkennen, die den in der Figur 5 gestrichelt angedeuteten Kameras 2821 bis 2824 zugeordnet sind.

Wie aus den Figuren 4 und 5 hervorgeht, ist es mit Hilfe der 12 Umlenkspiegel 4111 bis 4114 sowie 4221 bis 4228 möglich, die N = 13 Kameras 280, 2811 bis 2814 sowie 2821 bis 2825 weiter weg von der Referenzachse 24 anzuordnen. Dies ist Folge davon, dass die Umlenkspiegel 4111 bis 4114 sowie 4221 bis 4228 das auf die Kameras 2811 bis 2814 sowie 2821 bis 2825 auftreffende Licht von der Referenzachse 24 weg ablenken. Die Umlenkspiegel 4111 bis 4114 sowie 4221 bis 4228 benötigen keine Gehäuse und können so dimensioniert sein, dass ihre Fläche praktisch vollständig von den geneigten Lichtbündeln 271, 272 ausgeleuchtet wird. Dadurch können die Umlenkspiegel 4111 bis 4114 sowie 4221 bis 4228 sehr viel dichter zueinander angeordnet werden, als dies mit Kameras der Fall wäre.

Wie die Figur 5 zeigt, ist es auch mit den Umlenkspiegeln 4111 bis 4114 sowie 4221 bis 4228 nicht möglich, die Zahl der Kameras - und dadurch die Zahl der unabhängig voneinander messbaren Feldpositionen - beliebig zu erhöhen. Wenn die Zahl der unabhängig voneinander messbaren Feldpositionen größer als 13 sein soll, müssen entweder die Umlenkspiegel kleiner oder weitere Umlenkspiegel in einer dritten Ebene angeordnet sein, was z. B. durch einen größeren Abstand zwischen dem Prüfling 12 und der.Anordnung der Kameras möglich wird.

## Patentansprüche

1. Vorrichtung (10) zur Messung einer Abbildungseigenschaft eines optischen Systems (12), mit:
a) einer Lichtmustererzeugungseinrichtung (14), die dazu eingerichtet ist, in einer Brennebene (26) des optischen Systems (12) ein Lichtmuster zu erzeugen,
b) einer Referenzachse (24), an der die optische Achse des optischen Systems (12) ausrichtbar ist,
c) einer Anordnung von N voneinander getrennten Kameras (280; 2811 bis 2814, 2821 bis 2828), wobei
- jede Kamera ein Objektiv (30) und einen Lichtsensor (32) aufweist, der in einer Brennebene des Objektivs angeordnet ist, und wobei
- die Kameras derart auf einer der Lichtmustererzeugungseinrichtung (14) gegenüberliegenden Seite angeordneten sind, dass jede Kamera mit ihrem Lichtsensor das unter der Mitwirkung des optischen Systems entstandene Bild von genau einem Ausschnitt des Lichtmusters erfasst,
**gekennzeichnet durch**
mindestens ein Strahlablenkelement (4211 bis 4214, 4221 bis 4228), das derart zwischen dem optischen System und mindestens einer der Kameras (2811 bis 2814, 2821 bis 2828) angeordnet ist, dass es das auf die mindestens eine Kamera auftreffende Licht (271, 272) von der Referenzachse (24) weg ablenkt.

2. Vorrichtung nach Anspruch 1, **dadurch gekennzeichnet, dass** die optische Achse (3411 bis 3414, 3421 bis 3428) mindestens einer Kamera senkrecht zu der Referenzachse (24) angeordnet ist.

3. Vorrichtung nach Anspruch 1 oder 2, **dadurch gekennzeichnet, dass** N > 4 ist und mindestens vier erste Kameras (2811 bis 2814) in einer ersten Ebene angeordnet sind.

4. Vorrichtung nach Anspruch 3, **dadurch gekennzeichnet, dass** N > 9 ist und mindestens vier zweite Kameras (2821 bis 2818) in einer zweiten Ebene angeordnet sind, die parallel zu der ersten Ebene verläuft.

5. Vorrichtung nach Anspruch 4, **dadurch gekennzeichnet, dass** die Strahlablenkelemente (4211 bis 4214) das Licht (271), das auf die ersten Kameras (2811 bis 2814) fällt, weniger ablenken als das Licht (272), das auf die zweiten Kameras (2821 bis 2828) fällt.

6. Vorrichtung nach Anspruch 5, **dadurch gekennzeichnet, dass** die ersten Kameras (2811 bis 2814) und die zweiten Kameras (2821 bis 2828) und die Strahlablenkelemente (4211 bis 4214, 4221 bis 4228) so angeordnet sind, dass Licht (271), das unter einem Winkel α₁ bezüglich der Referenzachse (24) aus dem optischen System (12) austritt, von den Strahlablenkelementen (4211 bis 4214) stärker abgelenkt und auf die ersten Kameras (2811 bis 2814) gerichtet wird, und dass Licht (272), das unter einem Winkel α₂ > α₁ bezüglich der Referenzachse (24) aus dem optischen System (12) austritt, weniger stark abgelenkt und auf die zweiten Kameras (2821 bis 2828) gerichtet wird, wobei die erste Ebene weiter entfernt von dem optischen System (12) angeordnet ist als die zweite Ebene.

7. Vorrichtung nach einem der Ansprüche 3 bis 6, **dadurch gekennzeichnet, dass** in einer Ebene angeordnete Kameras und die diesen zugeordneten Strahlablenkelemente an einer gemeinsamen Tragstruktur (40, 44) befestigt sind.

8. Vorrichtung nach Anspruch 7, **dadurch gekennzeichnet, dass** die Tragstruktur eine ringförmige Montageplatte (40, 44) aufweist.

## Claims

1. Device (10) for measuring an imaging property of an optical system (12), comprising:
a) a light pattern generating device (14), which is set up to generate a light pattern in a focal plane (26) of the optical system (12),
b) a reference axis (24), along which the optical axis of the optical system (12) can be oriented,
c) an arrangement of N cameras (280; 2811 to 2814, 2821 to 2828), which are separated from one another, wherein
- each camera has an objective (30) and a light sensor (32) that is arranged in a focal plane of the objective, and wherein
- the cameras are arranged on a face opposite the light pattern generating device (14) such that each camera detects the image of precisely one section of the light pattern by way of the camera light sensor, said image being produced with the aid of the optical system,
**characterized by**
at least one beam deflecting element (4211 to 4214, 4221 to 4228), which is arranged between the optical system and at least one of the cameras (2811 to 2814, 2821 to 2828) such that it deflects the light (271, 272) striking the at least one camera away from the reference axis (24) .

2. Device according to Claim 1, **characterized in that** the optical axis (3411 to 3414, 3421 to 3428) of at least one camera is arranged perpendicular to the reference axis (24).

3. Device according to Claim 1 or 2, **characterized in that** N > 4 and at least four first cameras (2811 to 2814) are arranged in a first plane.

4. Device according to Claim 3, **characterized in that** N > 9 and at least four second cameras (2821 to 2818) are arranged in a second plane that extends parallel with respect to the first plane.

5. Device according to Claim 4, **characterized in that** the beam deflecting elements (4211 to 4214) deflect the light (271) striking the first cameras (2811 to 2814) less than the light (272) striking the second cameras (2821 to 2828) .

6. Device according to Claim 5, **characterized in that** the first cameras (2811 to 2814) and the second cameras (2821 to 2828) and the beam deflecting elements (4211 to 4214, 4221 to 4228) are arranged such that light (271) which exits the optical system (12) at an angle α₁ with respect to the reference axis (24) is deflected more strongly by the beam deflecting elements (4211 to 4214) and directed at the first cameras (2811 to 2814) and that light (272) that exits the optical system (12) at an angle α₂ > α₁ with respect to the reference axis (24) is deflected less strongly and directed at the second cameras (2821 to 2828), with the first plane being arranged farther away from the optical system (12) than the second plane.

7. Device according to one of Claims 3 to 6, **characterized in that** cameras arranged in a plane and the beam deflecting elements associated therewith are attached to a common support structure (40, 44).

8. Device according to Claim 7, **characterized in that** the support structure has a ring-shaped mounting plate (40, 44).

## Revendications

1. Dispositif (10) pour mesurer une caractéristique de formation d'image d'un système optique (12), comprenant :
a) un moyen de génération de motif lumineux (14) conçu pour générer un motif lumineux dans un plan focal (26) du système optique (12),
b) un axe de référence (24) sur lequel l'axe optique du système optique (12) peut être aligné,
c) un agencement de N caméras séparées les unes des autres (280 ; 2811 à 2814, 2821 à 2828), dans lequel
- chaque caméra présente un objectif (30) et un capteur de lumière (32) qui est disposé dans un plan focal de l'objectif, et dans lequel
- les caméras sont disposées sur un côté opposé au moyen de génération de motif lumineux (14), de telle sorte que chaque caméra détecte avec son capteur de lumière l'image d'exactement une partie du motif lumineux produite en coopération avec le système optique,
**caractérisé par**
au moins un élément de déviation de faisceau (4211 à 4214, 4221 à 4228) qui est disposé entre le système optique et au moins une des caméras (2811 à 2814, 2821 à 2828) de telle sorte qu'il dévie la lumière (271, 272) incidente sur ladite au moins une caméra par rapport à l'axe de référence (24).

2. Dispositif selon la revendication 1, **caractérisé en ce que** l'axe optique (3411 à 3414, 3421 à 3428) d'au moins une caméra est perpendiculaire à l'axe de référence (24).

3. Dispositif selon la revendication 1 ou la revendication 2, **caractérisé en ce que** N > 4 et au moins quatre premières caméras (2811 à 2814) sont disposées dans un premier plan.

4. Dispositif selon la revendication 3, **caractérisé en ce que** N > 9 et au moins quatre deuxièmes caméras (2821 à 2818) sont disposées dans un deuxième plan parallèle au premier plan.

5. Dispositif selon la revendication 4, **caractérisé en ce que** les éléments de déviation de faisceau (4211 à 4214) dévient moins la lumière (271) incidente sur les premières caméras (2811 à 2814) que la lumière (272) incidente sur les deuxièmes caméras (2821 à 2828).

6. Dispositif selon la revendication 5, **caractérisé en ce que** les premières caméras (2811 à 2814), les deuxièmes caméras (2821 à 2828) et les éléments de déviation de faisceau (4211 à 4214, 4221 à 4228) sont disposés de telle sorte que la lumière (271) qui sort du système optique (12) selon un angle α₁ par rapport à l'axe de référence (24) est déviée plus fortement par les éléments de déviation de faisceau (4211 à 4214) et dirigée sur les premières caméras (2811 à 2814), et que la lumière (272) qui sort du système optique (12) selon un angle α₂ > α₁ par rapport à l'axe de référence (24) est déviée moins fortement et dirigée sur les deuxièmes caméras (2821 à 2828), le premier plan étant disposé plus loin du système optique (12) que le deuxième plan.

7. Dispositif selon l'une des revendications 3 à 6, **caractérisé en ce que** les caméras disposées dans un plan et les éléments de déviation de faisceau qui leur sont associés sont fixés à une structure de support commune (40, 44).

8. Dispositif selon la revendication 7, **caractérisé en ce que** la structure de support présente une plaque de montage annulaire (40, 44).
